Europäisches Patentamt

European Patent Office

Office européen des brevets

(19)

(11) Publication number: **0 302 574 B1**

# EUROPEAN PATENT SPECIFICATION

(12)

(45) Date of publication of patent specification :
**21.11.91 Bulletin 91/47**

(51) Int. Cl.⁵ : **A01D 27/02**, A01D 33/10,
A01D 19/16

(21) Application number : **88201685.0**

(22) Date of filing : **03.08.88**

(54) A device for lifting tuburous or bulbuous crop.

(30) Priority : **03.08.87 NL 8701829**

(43) Date of publication of application :
**08.02.89 Bulletin 89/06**

(45) Publication of the grant of the patent :
**21.11.91 Bulletin 91/47**

(84) Designated Contracting States :
**BE DE FR GB NL**

(56) References cited :
**DE-A- 1 937 334**
**FR-A- 2 230 279**
**GB-A- 1 331 972**

(73) Proprietor : **Heyens, Eugène Joseph Eduardus**
**176, Zoutestraat**
**NL-4561 TC Hulst (NL)**

(72) Inventor : **Heyens, Eugène Joseph Eduardus**
**176, Zoutestraat**
**NL-4561 TC Hulst (NL)**

(74) Representative : **Hoorweg, Petrus Nicolaas et al**
**OCTROOIBUREAU ARNOLD & SIEDSMA**
**Sweelinckplein 1**
**NL-2517 GK The Hague (NL)**

EP 0 302 574 B1

## Description

The invention relates to a device for lifting tuberous or bulbous crops such as beets, comprising a mainframe movable over a field, said mainframe carrying two or more lifting members disposed adjacent each other in a row transverse to the travelling direction, elevating means arranged behind these members with respect to the travelling direction, and one or more transverse conveying means placed between said lifting members and elevating means, each of which is driven for rotation about a standing shaft grouped in a vow substantially prallel to said vow of lifting members and provided with a pick-up member rigidly connected to the bottom end of said shaft.

Such a device is disclosed in GB-A-1331972.

The transverse conveyors in the known devices of the type described in the preamble serve to carry the lifted tuberous or bulbous crops directly in front of the elevating means, following which they can be further processed, that is, have soil removed from them and be discharged and stored in an integrated bunker. With such a transverse conveyor it is possible to arrange the elevating means close behind the lifting members. More lifting members, for instance six rows, can moreover be arranged adjacent to one another. It has been found in practice that the transverse conveying means does not transport all lifted crops to the side but passes over a number which lie slightly deeper in the ground.

The invention has for its object to obviate the above mentioned drawback and provides to this end a device which is distinguished in that at least three standing shafts are grouped in the row offset with respect to the elevating means, each of said shafts being provided with conveying members, the active outer part of which lies at a distance from the standing shaft of no more than the outer portion of said pick-up member on the bottom end of said standing shaft, the standing shafts being driven for rotation such that the crop is conveyed at the front side of said conveying members in side way sense transversely to the direction of travelling direction to the interior of the main frame to be centered for the elevating means.

On heavy soils it can be of advantage to form the pick-up member with a number of bent or straight pins extending away from the shaft, which results in the effecting of a sieving action.

In accordance with another embodiment the pick-up member can also take the form of a closed disc.

In both the above stated embodiments it can be advantageous to provide the upper face of the carrier member with a cone-shaped form, whereby in the case of above mentioned embodiments a forward tilting of the standing shafts can be prevented.

The distance between the standing shafts can in addition be smaller than the sum of the distance of the outer portion of the pick-up member to the standing shaft, which results in the pick-up members overlapping one another over a determined peripr. portion. In the case of an embodiment in pin form pins can grip into one another. Conversely, in the case of an embodiment in disc form the discs can lie above one another.

Finally, it is favourable to accommodate a number of shafts in a sub-frame which is height adjustable with respect to the main frame.

Above mentioned and other features will become apparent from the figure description following hereinafter of a number of embodiments.

In the drawing :

Fig. 1 shows a perspective top view of a lifting device according to the invention that is forward movable over a field with parts partly broken away for elucidation of the assembly thereof.

Fig. 2 is a perspective top view of a portion of the device from fig. 1, and in particular a part of the transverse conveyor.

Fig. 3 is a top view corresponding with fig. 2 of another embodiment of a part of the transverse conveyor, and

Fig. 4 shows a perspective view corresponding with fig. 2 of a third embodiment.

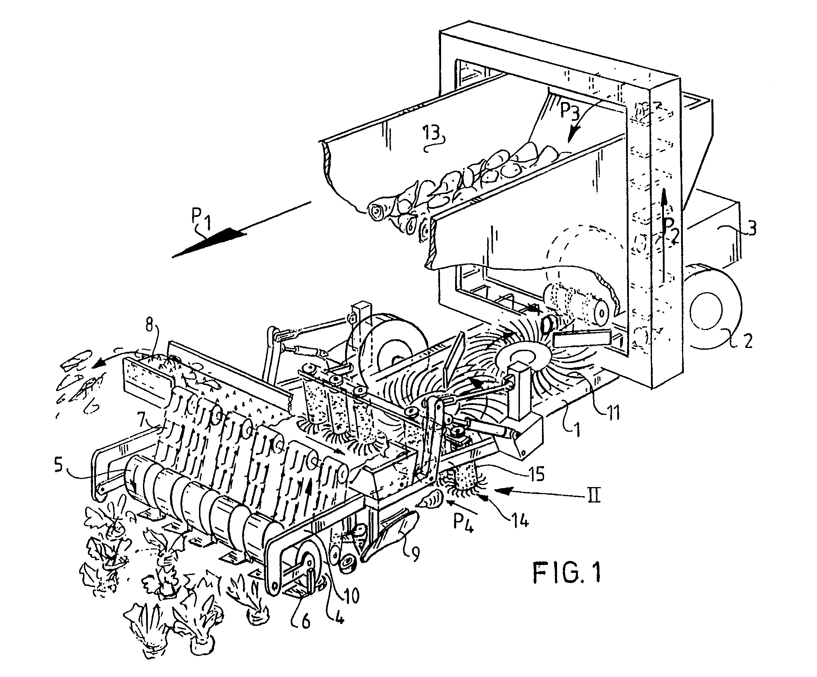

The device shown in fig. 1 has a main frame 1 carried by running wheels 2 the rear of which are driven by a motor part 3. Main frame 1 bears at its front a device for topping the tuberous or bulbous crop, which device 4 is provided in known manner with a flail rotor 5 for removing the haulm, cutting members 6 disposed thereunder for topping the upper portion of each tuber or bulb, an elevator conveyor 7 arranged to the rear thereof relative to the direction of forward movement $P_1$ for the stripped haulm, which elevator conveyor discharges the haulm onto an endless transverse belt 8. Arranged behind the topping knives 6 are the lifting members 9 in the form of lifting shoes which are likewise carried by the frame 10 of the topping device coupled to the front of the main frame 1.

Frame 1 supports an elevating conveyor 11 in the form of two sun wheels connected one behind the other which serve as sieving means for discharge of portions of soil adhering to the tuberous or bulbous crop. The cleaned tuberous or bulbous crops then fall into a cross conveyor 12 which carries the bulb away in the direction of the arrow $P_2$ and delivers it into a bunker 13 arranged in the top of the frame.

Such are thus the known elements of the lifting device according to the invention.

It is noted that a six-row lifter is illustrated in fig. 1. There are therefore six lifting members 9 disposed in a row adjacent to one another transversely of the direction of forward movement $P_1$. The tubers therefore come to lie in rows of six on the ground behind the members 9 and have to be transported in sideways sense in the direction of the arrow $P_4$ to the middle of the frame 1 in order to be centred for the elevating conveyor 11. Serving for this purpose are the transverse conveying means arranged according to the invention which are further elucidated hereinafter. The transverse conveying means 14 are substantially rotatably driven elements 15 of which there are six shown in fig. 1 adjacent one another and which are driven for rotation on standing shafts 16. The standing shafts are accommodated in a sub-frame 17 which is height adjustable with respect to frame 1 (see below).

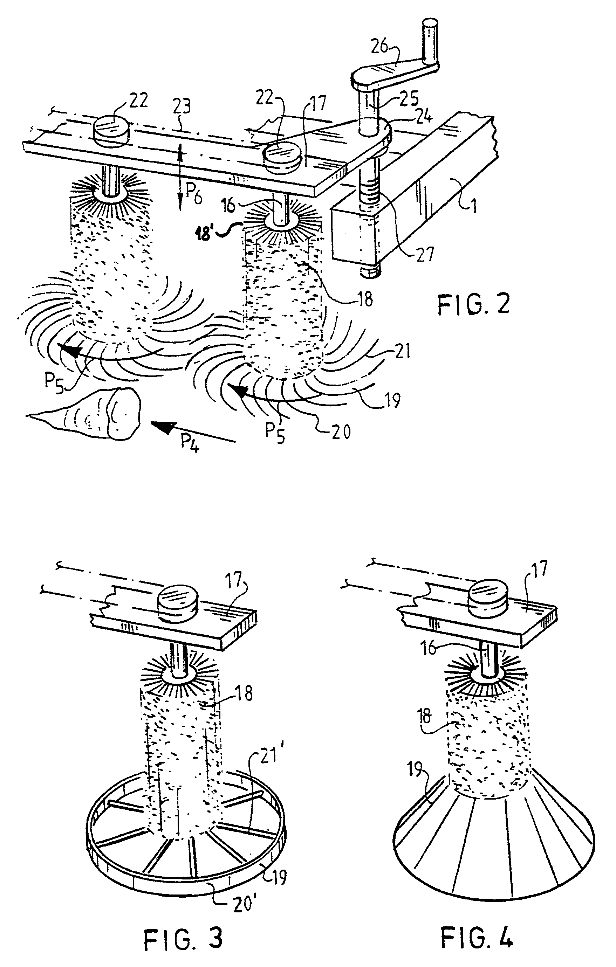

With reference to fig. 2 it can be seen clearly that each of the transverse conveying means is formed by a group of pins 18' which extend over a determined distance in radial direction from the shaft 16. The outer portions of pins 16 form a cylindrical envelope surface concentric to the standing shaft 16.

Arranged on the lower end of shaft 16 is a pick-up member 19 the outer portions 20 of which lie at a greater distance from shaft 16 than the envelope surface consisting of the outer portions of the pins 18'. The pick-up member as in fig. 2 is formed by a number of bent pins 21 which are set trailing relative to the direction of turn $P_5$.

The driving of shaft 16, which is mounted for rotation in sub-frame 17, is performed for example by a chain wheel 22 arranged on the upper side of the frame, around which wheel is wound a common driving chain 23 which drives the chain wheels of the shafts in the same sense. Each of the transverse conveying means 18 will as a result be driven in the same direction ($P_5$). With such a rotational spin there therefore results a transverse conveying direction as according to arrow $P_4$, whereby it is remarked that the group of standing shafts on the other side of frame 1 are driven in opposing direction.

It will be apparent from the above that the pick-up members 19 form a pick-up surface at the height of the underside of the standing shafts 16, which surface serves to support the bulbous or tuberous crop as it is carried along by the conveyor means 18.

The sub-frame 17 is height adjustable in the direction of arrow $P_6$ relative to the main frame 1 since sub-frame 17 is for instance provided with a supporting arm 24 in which an axially non-displaceable screw spindle 25 is mounted for rotation. The screw spindle is provided at the top end with a hand-grip 26 and at the bottom with a screw thread 27 which co-acts with a threaded hole in the side beam of main frame 1. By turning the screw spindle 25 the height of sub-frame 17 and therefore the height of pick-up member 19 can be set precisely relative to frame 1 and therefore the ground and the elevating conveyor 11.

Fig. 3 shows an embodiment whereby the pick-up member 19 takes the form of a wheel sieve with radially directed spokes 21' which are joined to one another at the outer ends by a closed annular rim 20'.

Fig. 4 shows an embodiment whereby on the underside of shaft 16 is arranged a pick-up member 19 which takes the form of a cone-shaped closed disc.

Other embodiments are possible within the scope of the invention.

## Claims

1. A device for lifting tuberous or bulbous crops such as beets, comprising a mainframe (1) movable over a field, said mainframe (1) carrying two or more lifting members (9) disposed adjacent each other in a row transverse to the travelling direction (P1), elevating means (11) arranged behind these members with respect to the travelling direction (P1), and one or more transverse conveying means (14) placed between said lifting members (9) and elevating means (11), each of which is driven for rotation about a standing shaft (16) grouped in a row substantially parallel to said row of lifting members (9) and provided with a pick-up member (19) rigidly connected to the bottom end of said standing shaft (16), characterized in that there are at least three standing shafts (16) grouped in the row offset with respect to the elevating means (11), each of said shafts (16) being provided with conveying members (18), the active outer part of which lies at a distance from the standing shaft (16) no more than the outer portion of said pick-up member (19) on the bottom end of said standing shaft (16), the standing shafts (16) being driven for rotation such that the crop is conveyed at the front side of said conveying members (18) in side way sense transversely to the direction of travelling direction (P1) to the interior of the main frame (1) to be centered for the elevating means (11).

2. Device as claimed in claim 1, characterized in that each of said conveying members (18) is formed by pins (18') extending radially form said shaft (16).

3. Device as claimed in claim 1 and 2, characterized in that the pick-up member (19) is formed by bent or straight pins (21, 21') extending away from the shaft (16).

4. Device as claimed in claim 1-3, characterized in that the outer portion of the pick-up member (19) is a circular closed rim (20').

5. Device as claimed in claim 4, characterized in that the pick-up member (19) is a closed disc.

6. Device as claimed in any of the foregoing claims, characterized in that the upper face of the or each pick-up member (19) has a cone-shaped form (fig. 4).

7. Device as claimed in any of the foregoing claims, characterized in that the distance between the standing shafts (16) is smaller than the sum of the distance of the outer portion (20) of the pick-up member (19) to said shaft (16).

8. Device as claimed in any of the foregoing claims, characterized in that two or more transverse conveyor means (14) provided with pick-up members (19) are mounted for rotation in a sub-frame (17), which sub-frame (17) is height adjustable with respect to the main frame (1).

## Patentansprüche

1. Vorrichtung zum Ausheben knolligen oder zwiebelartigen Erntegutes, z.B. von Rüben, mit einem Hauptrahmen (1), der über ein Feld beweglich ist und zwei oder mehrere Aushuborgane (9) trägt, die benachbart zueinander in einer Reihe quer zur Bewegungsrichtung (P1) angeordnet sind, wobei eine Hubvorrichtung (11) bezüglich der Fahrtrichtung (P1) hinter diesen Organen angeordnet sind, und mit einem oder mehreren Querfördervorrichtungen (14), die zwischen den Aushuborganen (9) und der Hubvorrichtung (11) angeordnet sind und von denen jedes um eine stehende Welle (16) gruppenweise in einer Reihe im wesentlichen parallel zur Reihe der Aushuborgane (9) angeordnet sind, die mit einem Aufnehmer (19) ausgestattet sind, der starr am Bodenende der stehenden Welle (16) angeordnet ist, dadurch gekennzeichnet, daß wenigstens drei stehende Wellen (16) in der Reihe versetzt gegenüber den Hubvorrichtungen (11) gruppiert sind, wobei jede der Wellen (16) mit Fördergliedern (18) versehen ist und der aktive äußere Teil hiervon in einem Abstand zu der stehenden Welle (16) liegt, der nicht größer ist als der äußere Abschnitt des Aufnehmers (19) am Bodenende der stehenden Welle (16) und daß die stehenden Wellen derart in Drehung versetzt werden, daß das Erntegut auf die Vorderseite der Förderglieder (18) seitlich quer zur Bewegungsrichtung (P1) nach dem Inneren des Hauptrahmens (1) gefördert wird, um hinsichtlich der Hubvorrichtung (11) zentriert zu werden.

2. Vorrichtung nach Anspruch 1, dadurch gekennzeichnet, daß jedes der Förderglieder (18) von Stiften (18') gebildet wird, die radial von der Welle (16) vorstehen.

3. Vorrichtung nach den Ansprüchen 1 und 2, dadurch gekennzeichnet, daß der Aufnehmer (19) durch abgebogene oder gerade Stifte (21, 21') gebildet wird, die von der Welle (16) vorstehen.

4. Vorrichtung nach den Ansprüchen 1 bis 3, dadurch gekennzeichnet, daß der äußere Teil des Aufnehmers (19) von einem kreisförmigen geschlossenen Reifen (20') gebildet wird.

5. Vorrichtung nach Anspruch 4, dadurch gekennzeichnet, daß der Aufnehmer (19) eine geschlossene Scheibe ist.

6. Vorrichtung nach einem der vorhergehenden Ansprüche, dadurch gekennzeichnet, daß die Oberfläche des oder jedes Aufnehmers (19) eine konische Gestalt hat (Fig. 4).

7. Vorrichtung nach einem der vorhergehenden Ansprüche, dadurch gekennzeichnet, daß der Abstand zwischen den stehenden Wellen (16) kleiner ist als die Summe der Abstände des äußeren Abschnitts (20) des Aufnehmers (19) nach der Welle (16).

8. Vorrichtung nach einem der vorhergehenden Ansprüche, dadurch gekennzeichnet, daß zwei oder mehrere Querfördervorrichtungen (14) mit Aufnahmegliedern (19) drehbar in einem Unterrahmen (17) gelagert sind, und daß dieser Unterrahmen (17) höheneinstellbar gegenüber dem Hauptrahmen (1) ist.

## Revendications

1. Machine pour arracher les produits de récolte, tubercules ou racine, tels que les betteraves, comprenant un châssis principal (1) que l'on peut faire circuler sur un champ, ledit châssis principal (1) portant deux ou plus de deux organes arracheurs (9) disposés adjacents les uns aux autres en une rangée transversale au sens de la marche (P₁), des moyens élévateurs (11) agencés en arrière de ces organes, relativement au sens de la marche (P₁), et un ou plusieurs moyens transporteurs transversaux (14) placés entre lesdits organes arracheurs (9) et lesdits moyens élévateurs (11), et dont chacun est entraîné pour tourner autour d'un de plusieurs arbres sensiblement verticaux (16) groupés en une rangée sensiblement parallèle à ladite rangée des organes arracheurs (9) et munis d'un organe ramasseur (19) fixé rigidement à l'extrémité inférieure dudit arbre sensiblement vertical (16), caractérisée par le fait qu'au moins trois arbres sensiblement verticaux (16) sont groupés dans la rangée décalée par rapport aux moyens élévateurs (11), chacun desdits arbres (16) étant équipé d'organes transporteurs (18) dont la partie extérieure active se trouve à une distance de l'arbre sensiblement vertical (16) qui n'est pas plus grande que la partie extérieure dudit organe ramasseur (19) prévu sur l'extrémité inférieure dudit arbre sensiblement vertical (16), les arbres sensiblement verticaux (16) étant entraînés en rotation de telle manière que les produits soient transportés sur le côté avant desdits organes transporteurs (18) dans une direction latérale, transversalement au sens de la marche (P₁), vers l'intérieur du châssis principal (1) pour être centrés et être pris par les moyens élévateurs (11).

2. Machine selon la revendication 1, caractérisée en ce que chacun desdits organes transporteurs (18) est formé de doigts (18') qui partent radialement dudit arbre (16).

3. Machine selon l'une des revendications 1 et 2, caractérisée en ce que l'organe ramasseur (19) est formé de doigts coudés ou droits (21, 21') qui partent de l'arbre (16).

4. Machine selon l'une des revendications 1 à 3, caractérisée en ce que la partie extérieure de l'organe ramasseur (19) est une jante circulaire en cercle fermé (20').

5. Machine selon la revendication 4, caractérisée en ce que l'organe ramasseur (19) est un disque plein.

6. Machine selon l'une quelconque des revendications précédentes, caractérisée en ce que la face supérieure de l'organe ramasseur ou de chaque organe ramasseur (19) a une forme de configuration conique (figure 4).

7. Machine selon l'une quelconque des revendications précédentes, caractérisée en ce que la distance entre les arbres sensiblement verticaux (16) est inférieure à la somme des distances séparant la partie extérieure (20) de l'organe ramasseur (19) dudit arbre (16).

8. Machine selon l'une quelconque des revendications précédentes, caractérisée en ce que deux ou plus de deux moyens transporteurs transversaux (14) équipés d'organes ramasseurs (19) sont montés pour tourner dans un châssis secondaire (17), lequel châssis secondaire (17) est réglable en hauteur par rapport au châssis principal (1).

FIG. 1

EP 0 302 574 B1

FIG. 2

FIG. 3

FIG. 4